# EUROPÄISCHE PATENTSCHRIFT

(11) **EP 3 990 268 B1**
(45) Veröffentlichungstag und Bekanntmachung des Hinweises auf die Patenterteilung: **13.08.2025**
(21) Anmeldenummer: 20734142.1
(22) Anmeldetag: 18.06.2020
(51) Int. Cl.: B29D 30/00, G06K 19/077

(54) **VERFAHREN UND VORRICHTUNG ZUR HERSTELLUNG EINES GUMMIBAUTEILES**
METHOD AND DEVICE FOR PRODUCING A RUBBER COMPONENT
PROCÉDÉ ET DISPOSITIF DE FABRICATION D'UN COMPOSANT EN CAOUTCHOUC

(30) Priorität: 26.06.2019 DE 102019209274
(43) Veröffentlichungstag der Anmeldung: 04.05.2022
(73) Patentinhaber: Continental Reifen Deutschland GmbH, 30175 Hannover (DE)
(72) Erfinder: EHMKE, Tobias, 30419 Hannover (DE); LUDWIG, Jens, 30419 Hannover (DE); ADAM, Jens Oliver, 30419 Hannover (DE)
(74) Vertreter: Continental Corporation
(86) Internationale Anmeldenummer: PCT/EP2020/066876
(87) Internationale Veröffentlichungsnummer: WO 2020/260115

(56) Entgegenhaltungen:
- EP-A1- 2 303 558
- EP-A1- 3 385 886
- EP-A2- 2 172 878
- EP-B1- 3 962 721
- JP-A- 2003 196 631
- US-A1- 2009 126 861

## Beschreibung

Die Erfindung betrifft ein Verfahren zum Herstellen eines Gummibauteiles, bei welchem mindestens eine elektronische Baugruppe zwischen einer unteren und einer oberen Lage eines Gummimaterials eingebettet wird. Ferner betrifft die Erfindung auch eine entsprechende Vorrichtung zur Herstellung derartiger Gummibauteile.

In jüngerer Zeit sind vermehrt Gummibauteile der eingangs genannten Art auf den Markt gekommen, die beispielsweise an Fahrzeugreifen angebracht oder in den aus mehreren Komponenten aufgebauten Reifen eingebracht werden, um Daten auslesbar zu speichern, etwa zum Zwecke der erleichterten Materiallogistik, als Originalitätsnachweis oder auch zum Zwecke des Abspeicherns von Verschleißparametern oder Eigenschaften des solchermaßen ausgerüsteten Reifens.

Durch die Einbettung der elektronischen Baugruppe zwischen einer unteren und einer oberen Lage eines Gummimaterials wird nicht nur eine vorteilhafte Robustheit gegenüber Stößen und anderen Erschütterungen erzielt, sondern auch eine problemlose Anbringung bzw. Integration an bzw. im Reifen. Gummibauteile der genannten Art sind jedoch nicht auf die Anwendung an oder in Reifen beschränkt, sondern können auch an anderen Gegenständen zum Einsatz kommen.

Die verwendeten elektronischen Baugruppen sind üblicherweise als passive Radiofrequenztransponder ausgeführt und kommen ohne eigene Stromversorgung aus, sodass sie besonders kompakt und langlebig sind. Insbesondere kann es sich bei den elektronischen Baugruppen um RFID-Transponder handeln.

In der EP 2 172 878 A2 wird eine Vorrichtung zum Herstellen eines RFID-Transponders offenbart.

Aus der EP 2 303 558 B1 ist ein Verfahren und eine Anlage zur Herstellung derartiger Gummibauteile bekannt, bei denen die mindestens eine elektronische Baugruppe gemeinsam mit den mit gleicher Geschwindigkeit zugeführten unteren und oberen Lagen des Gummimaterials durch einen Walzenspalt geführt wird, wodurch die untere und obere Lage des Gummimaterials in einem Laminiervorgang unter Zwischenlage der mindestens einen elektronischen Baugruppe miteinander verbunden werden. Ein solches kontinuierliches Verfahren zeichnet sich durch hohe Ausstoßleistung aus, die jedoch zum wirtschaftlichen Betrieb auch entsprechend hohe Abnahmekapazitäten fordert und im Hinblick auf eine schwankende on-demand Herstellung derartiger Gummibauteile nachteilig ist.

Die Stand der Technik nach Art. 54(3) EPÜ bildende EP 3 962 721 A1 offenbart ein gattungsgemäßes Verfahren und eine Vorrichtung, die RFID-Transponder auf einer unteren Lage eines Gummimaterials platzieren und anschließend Zuschnitte einer oberen Lage eines Gummimaterials auf den auf der unteren Lage befindlichen RFID-Transpondern platziert und beide Lagen miteinander verpresst, sodass der RFID-Transponder zwischen diesen eingebettet wird. Anschließend wird entlang des oberen Zuschnittes ein Trennschnitt ausgeführt, um den eingebetteten RFID-Transponder als Gummibauteil zu vereinzeln.

Aufgabe der vorliegenden Erfindung ist es, ein Verfahren und eine Vorrichtung der eingangs genannten Art vorzuschlagen, die eine einfache und flexible Herstellung der Gummibauteile auch bei wechselndem Bedarf mit geringem Aufwand ermöglicht.

Zur Lösung der gestellten Aufgabe wird erfindungsgemäß ein Verfahren gemäß den Merkmalen des Patentanspruches 1 vorgeschlagen.

Eine Vorrichtung zur Lösung der gestellten Aufgabe ist Gegenstand des Patentanspruchs 6.

Vorteilhafte Ausgestaltungen und Weiterbildungen der Erfindung sind Gegenstand der abhängigen Ansprüche.

Das erfindungsgemäße Verfahren zum Herstellen des Gummibauteiles sieht die Abfolge der nachstehenden Schritte vor:
a) Zuführen eines Bandes der unteren Lage des Gummimaterials, welches auf der Oberseite mit in einem vorbestimmten Abstand aufgebrachten elektronischen Baugruppen versehen ist, in einer Förderrichtung;
b) Aufbringen eines auf ein vorbestimmtes Fertigmaß zugeschnittenen Abschnittes der oberen Lage des Gummimaterials auf die in Förderrichtung betrachtet zuvorderst angeordnete elektronische Baugruppe und haftfestes Verbinden mit der unteren Lage des Gummimaterials unter Einbettung der elektronischen Baugruppe zu einem Gummibauteil am in Förderrichtung gesehen voreilenden Ende der unteren Lage, wobei die Abschnitte der oberen Lage eine gegenüber dem Abstand verkürzte Länge aufweisen;
c) Abtrennen des Gummibauteiles von der unteren Lage.

Durch diese Abfolge werden die Einzelkomponenten des Gummibauteiles, nämlich untere und obere Lage des Gummimaterials sowie die mindestens eine elektronische Baugruppe nicht kontinuierlich zu dem Gummibauteil verbunden, sondern die obere Lage wird auf der unteren zugeführten Lage, auf der sich das mindestens eine elektronische Bauteil bereits befindet, vorzugsweise taktweise durch Aufbringen eines bereits auf das vorbestimmte Fertigmaß zugeschnittenen Abschnittes derselben aufgebracht, vorzugsweise nach Art eines Pflasters vertikal von oben auf die oberseitig mit der elektronischen Baugruppe versehene untere Lage aufgelegt.

Erfindungsgemäß ist dabei vorgesehen, dass der eingesetzte Abschnitt der oberen Lage eine gegenüber dem Abstand zwischen aufeinanderfolgenden elektronischen Baugruppen verkürzte Länge aufweist, sodass nach dem Verpressen mit der unteren Lage und dem Abtrennen vom in Förderrichtung betrachtet nacheilenden Band das erhaltene Gummibauteil obere und untere Lagen des Gummimaterials aufweist, die nicht bündig miteinander abschließen. Vielmehr weist dann die untere Lage eine größere Länge auf, sodass in und/oder entgegen der Förderrichtung betrachtet ein abgestufter Dickensprung zwischen der unteren und der oberen Lage erzeugt wird, der insbesondere bei Einbindung der erstellten Gummibauteile in Lagen eines Fahrzeugreifens bei dessen Herstellung zur Erzielung einer guten Haftung an den Reifenbaulagen wünschenswert und vorteilhaft ist.

Das Aufbringen und haftfeste Verbinden des Abschnittes der oberen Lage mit der unteren Lage kann insbesondere ein Andrücken bzw. Verpressen des Abschnittes der oberen Lage auf der unteren Lage umfassen.

Anschließend wird der erzeugte Verbund, d. h. das fertige Gummibauteil, abschnittsweise weitergefördert und von dem nacheilenden Band der unteren Lage abgetrennt und vereinzelt.

Die Ausrüstung des Bandes der unteren Lage mit mindestens einer auf der Oberseite positionierten und vorzugsweise auch fixierten elektronischen Baugruppe kann wahlweise unmittelbar vor dem Aufbringen der oberen Lage oder bereits in einer vorausgegangenen Bearbeitungsstufe erfolgen.

Um eine taktweise sich wiederholende Produktion zu ermöglichen, werden anschließend die Schritte a) bis c) mindestens einfach bis dauerhaft wiederholt.

Nach einem Vorschlag der Erfindung wird die Zuführung des Bandes der unteren Lage taktweise durchgeführt und vor der Ausführung des Schrittes B gestoppt, sodass das Aufbringen des zugeschnittenen Abschnittes der oberen Lage unter Einbettung des elektronischen Bauteils bei feststehendem bzw. ruhenden Band der unteren Lage auf dieses erfolgt. Anschließend wird nach dem Aufbringen des Abschnittes der oberen Lage im Schritt b) das Band der unteren Lage um den Abstand zwischen aufeinanderfolgenden elektronischen Baugruppen in Förderrichtung vorgeschoben, wobei unmittelbar nach dem Aufbringen des Abschnittes und/oder während des Vorschubs in Förderrichtung ein Anpressen des Abschnittes der oberen Lage an die untere Lage unter Einschluss der elektronischen Baugruppe zur Ausbildung des Gummibauteils zum Beispiel mit einer Andruckrolle bewirkt wird. Anschließend wird das fertiggestellte Gummibauteil von dem in Förderrichtung betrachtet nacheilenden Band der unteren Lage abgetrennt und vereinzelt.

Alternativ kann nach einem weiteren Vorschlag der Erfindung auch vorgesehen sein, dass nach dem Aufbringen des Abschnittes der oberen Lage zunächst ein Verpressen mit der unteren Lage unter Einschluss der elektronischen Baugruppe durchgeführt und sodann das gebildete Gummibauteil von dem in Förderrichtung betrachtet nacheilenden Band der unteren Lage abgetrennt und vereinzelt wird, bevor das Band der unteren Lage anschließend um den Abstand zwischen dem aufeinanderfolgenden elektronischen Baugruppen in Förderrichtung vorgeschoben wird.

Eine weitere alternative Ausführungsform der Erfindung sieht vor, dass die Zuführung des Bandes der unteren Lage nicht gestoppt wird, während der Abschnitt der oberen Lage auf die in Förderrichtung betrachtet zuvorderst angeordnete elektronische Baugruppe der unteren Lage aufgebracht, mit dieser verpresst und anschließend das gebildete Gummibauteil abgetrennt wird.

Die im Rahmen des erfindungsgemäßen Verfahrens zwischen der unteren und oberen Lage eingebetteten elektronischen Baugruppen unterliegen keiner generellen Beschränkung, sind jedoch nach einem Vorschlag der Erfindung bevorzugt als RFID-Transponder ausgeführt.

Die untere und obere Lage des Gummimaterials werden beim Aufbringen des Abschnittes der oberen Lage auf der die mindestens eine elektronische Baugruppe tragenden Oberseite der unteren Lage in einem Laminierprozess unter Einwirkung von Druck und/oder Wärme haftfest miteinander verbunden, beispielsweise durch Einsatz entsprechender Andruckwalzen oder -rollen, die gegebenenfalls auch temperiert sein können. Ferner können auch Strahlungsheizer vorgesehen sein, um insbesondere die obere Lage vor dem Aufbringen auf eine für den Laminierprozess vorteilhafte Temperatur zu erwärmen.

Die nach dem erfindungsgemäßen Verfahren hergestellten Gummibauteile sind nach einem Vorschlag der Erfindung dazu bestimmt, an einem Reifen angebracht, d. h. mit diesem verbunden zu werden. Auch können die Gummibauteile oder die daraus vereinzelten Einzelbauteile bereits während des Herstellungsprozesses eines solchen Reifens vor dem Vulkanisieren desselben zwischen einzelne Lagen der für den Reifenaufbau verwendeten Gummilagen eingebracht werden, sodass sie nach dem Vulkanisieren unverlierbar innerhalb der Reifenstruktur integriert sind.

Die im Rahmen der Erfindung vorgeschlagene Vorrichtung zum Herstellen eines solchen Gummibauteiles, welches mindestens eine zwischen einer unteren und einer oberen Lage eines Gummimaterials eingebettete elektronische Baugruppe aufweist, umfasst eine Einrichtung für die Zuführung eines Bandes der unteren Lage in einer Förderrichtung, auf das elektronische Baugruppen in regelmäßigen Abständen auf der Oberseite aufgebracht sind, eine Aufbringvorrichtung zum Aufbringen und haftfesten Verbinden eines auf ein vorbestimmtes Fertigmaß zugeschnittenen Abschnittes der oberen Lage des Gummimaterials auf die in Förderrichtung betrachtet zuvorderst angeordnete elektronische Baugruppe unter Einbettung derselben und eine Trennvorrichtung zum Abtrennen des hergestellten Gummibauteiles.

Erfindungsgemäß sind die Abschnitte der oberen Lage so bemessen, dass sie eine gegenüber dem Abstand aufeinanderfolgender elektronischer Baugruppen auf dem Band der unteren Lage verkürzte Länge aufweisen.

Die Einrichtungen für die Zuführung des Bandes der unteren Lage können beispielsweise von einem entsprechenden umlaufenden Förderband oder einem Arbeitstisch gebildet sein.

Nach einem Vorschlag der Erfindung wird die mindestens eine elektronische Baugruppe von einem RFID-Transponder gebildet, jedoch können auch beliebige andere elektronische Baugruppen, beispielsweise Sensoren und dergleichen mehr zum Einsatz kommen und mit der erfindungsgemäßen Vorrichtung sowie dem Verfahren zwischen einer unteren und einer oberen Lage eines Gummimaterials eingebettet werden.

Nach einem Vorschlag der Erfindung ist das Gummibauteil dazu bestimmt, in einen Reifen eingebracht oder mit diesem verbunden zu werden.

Nach einem weiteren Vorschlag der Erfindung ist die Einrichtung zum Zuführen des Bandes der unteren Lage taktweise bewegbar, um die Aufbringung der Abschnitte der oberen Lage, dass Verpressen und das Vereinzeln der hergestellten Gummibauteile taktweise bei feststehender unterer Lage durchführen zu können.

Weitere Ausgestaltungen und Einzelheiten der Erfindung werden nachfolgend anhand der ein Ausführungsbeispiel darstellenden schematischen und stark vereinfachten Zeichnung dargestellt.

Es zeigen:
- Figur 1: ein Gummibauteil gemäß der Erfindung im Schnitt;
- Figur 2: Einzelheiten einer erfindungsgemäßen Vorrichtung zur Herstellung des Gummibauteils gemäß Figur 1;
- Figur 3: weitere Einzelheiten der erfindungsgemäßen Vorrichtung zur Herstellung des Gummibauteils gemäß Figur 1;
- Figur 4: weitere Einzelheiten der erfindungsgemäßen Vorrichtung zur Herstellung des Gummibauteils gemäß Figur 1.

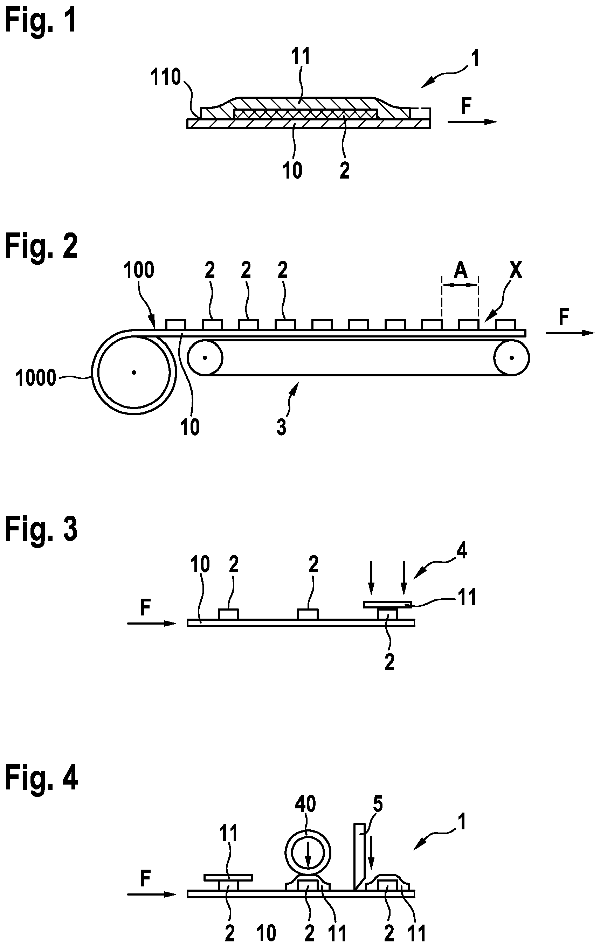

Aus den Figuren 2 bis 4 ist in stark vereinfachter Form eine Vorrichtung ersichtlich, die zur Herstellung eines Gummibauteils 1 dient, welches beispielsweise im Rahmen der Reifenherstellung zur Anwendung kommt und aus der Figur 1 in einer vergrößerten Schnittdarstellung ersichtlich ist. Zur besseren Übersichtlichkeit ist in den Figuren 3 und 4 nur ein Teil der aus der Figur 2 ersichtlichen Komponenten dargestellt.

Das Gummibauteil 1 umfasst mindestens eine elektronische Baugruppe 2, üblicherweise in Form eines RFID-Transponders 2, die zwischen zwei im Wesentlichen parallel aufeinanderliegenden Lagen, nämlich einer unteren Lage 10 und einer oberen Lage 11 eines Gummimaterials eingebettet ist.

Die untere und obere Lage 10, 11 sind vorzugsweise in Form von langgestreckten streifenförmigen Abschnitten konfektioniert und bestehen aus einem geeigneten Gummimaterial, insbesondere im Hinblick auf die gewünschte Einbettung eines insbesondere als RFID-Transponder mit Sende- und Empfangsfunktion ausgeführten elektronischen Bauteiles 2.

Zur Herstellung eines solchen Gummibauteils 1 wird gemäß Figur 2 von einer Vorratseinrichtung, beispielsweise einem Extruder oder einem Materialspeicher 1000 ein Band der unteren Lage 10 des Gummimaterials über eine mit Bezugszeichen 3 angedeutete Einrichtung3 in Form eines umlaufenden Bandförderers zugeführt. Die Einrichtung 3 zur Zuführung der unteren Lage 10 ist so ausgeführt, dass sie bedarfsgesteuert taktweise antreibbar ist, ansonsten aber stillsteht. Insofern kann die untere Lage 10 bei Betrieb der Einrichtung 3 in einer Förderrichtung F zugeführt bzw. vorgeschoben und durch anschließendes Außerbetriebsetzen der Einrichtung 3 vorübergehend ortsfest positioniert werden.

Darüber hinaus umfasst die Vorrichtung nicht näher dargestellte Mittel zum Aufbringen der mindestens einen elektronischen Baugruppe 2 auf die Oberseite 100 der zugeführten unteren Lage 10, sodass die untere Lage 10 bereits mit auf der Oberseite 100 in vorzugsweise regelmäßigen Abständen A aufliegenden elektronischen Baugruppen 2 der Einrichtung 3 zugeführt und von dieser gefördert bzw. vorübergehend und taktweise ortsfest positioniert wird.

Oberhalb des zugeführten und bereitgestellten Längenabschnittes der unteren Lage 10 befindet sich beispielsweise in dem mit Bezugszeichen X in Figur 2 gekennzeichneten Bereich eine Aufbringvorrichtung 4, über die ein separat bereitgestellter und bereits auf ein vorbestimmtes Fertigmaß zugeschnittener Abschnitt der oberen Lage 11 des Gummimaterials aufgenommen und in der durch Pfeile veranschaulichten Richtung vertikal von oben auf die im Bereich der Oberseite 100 mit einer elektronischen Baugruppe 2 versehene untere Lage 10 aufgebracht werden kann. Auch die obere Lage 11 kann dabei aus einem nicht dargestellten Extruder oder einer Vorratseinrichtung zugeführt werden.

Die Herstellung des Gummibauteils 1, welche die Einbettung der elektronischen Baugruppen 2 zwischen der unteren und oberen Lage 10,11 erfordert, wird dadurch bewirkt, dass gemäß Figur 3 die Aufbringvorrichtung 4 einen solchen bereitgestellten Längenabschnitt der oberen Lage 11 auf eine beispielsweise bei stillstehender Einrichtung 3 ortsfest gehalterten Längenabschnitt der unteren Lage 10 aufpresst, der eine darauf befindliche elektronische Baugruppe 2 trägt, sodass dieser Längenabschnitt der oberen Lage 11 auf der Oberseite 100 des Längenabschnittes der unteren Lage 10 unter Einschluss der ebenfalls auf der Oberseite 100 befindlichen elektronischen Baugruppe 2 zum Liegen kommt. Dies wird vorzugsweise an der in Förderrichtung F des Bandes der unteren Lage 10 betrachtet zuvorderst auf der Einrichtung 3 befindlichen elektronischen Baugruppe 2 bewirkt. Infolge eines ausreichend hohen ausgeübten Druckes der Aufbringvorrichtung 4 wird dabei durch den aufgebrachten Druck und/oder Wärme die obere Lage 11 mit der unteren Lage 10 unter Einschluss der elektronischen Baugruppen 2 durch Laminieren haftfest verbunden.

Zusätzlich kann im Anschluss an das Aufbringen der oberen Lage 11 auch weiterer Druck auf den Verbund über eine Andruckrolle 40 ausgeübt werden, unter der der gebildete Verbund auf der Einrichtung 3 taktweise läuft, wie in Fig. 4 angedeutet.

Anschließend wird gemäß Figur 4 das solchermaßen am in Förderrichtung F betrachtet voreilenden Ende des Bandes der unteren Lage 10 ausgebildete Gummibauteil 1 mit einer Trennvorrichtung 5, beispielsweise einem Quertrennmesser, abgetrennt, sodass letztlich ein vereinzeltes Gummibauteil gemäß Figur 1 erhalten wird.

Es wird als vorteilhaft angesehen, dass die Zuführung des Bandes der unteren Lage 10 lediglich taktweise erfolgt und vor dem Aufbringen des auf ein vorbestimmtes Fertigmaß zugeschnittenen Abschnittes der oberen Lage 11 des Gummimaterials auf die untere Lage 10 die Einrichtung 3 gestoppt wird und nach dem Aufbringen des Abschnittes 11 der oberen Lage das Band der unteren Lage 10 um den Abstand A zwischen zwei aufeinanderfolgenden elektronischen Baugruppen 2 in Förderrichtung F vorgeschoben wird, sodass bei diesem taktweisen Vorschub um den Abstand A die zusätzliche Andruckrolle 40 zum Einsatz kommen kann. Im Anschluss wird das erstellte Gummibauteil 1 von dem in Förderrichtung F betrachtet nacheilenden Band der unteren Lage 10 durch die Trennvorrichtung 5 abgetrennt.

Alternativ ist es jedoch auch möglich, die Einrichtung 3 zwar vor der Ausführung des Schrittes zum Aufbringen des Abschnittes der oberen Lage 11 auf die untere Lage 10 zu stoppen, jedoch wird dann nicht nur die obere Lage 11 unter Einschluss der elektronischen Baugruppe 2 auf die untere Lage 10 aufgebracht und mit dieser unter Ausbildung des Gummibauteiles 1 verpresst, sondern das gebildete Gummibauteil 1 wird dann bei weiterhin stehender Einrichtung 3 auch sogleich abgetrennt, bevor in einem neuen Arbeitstakt das in Förderrichtung F betrachtet nacheilende Band der unteren Lage 10 durch Aktivierung der Einrichtung 3 um den Abstand A vorgeschoben wird.

Wesentlich für das vorangehend erläuterte Verfahren und die Vorrichtung ist es, dass das Laminieren der oberen Lage 11 auf die untere Lage 10 mit den darauf befindlichen elektronischen Baugruppen 2 diskontinuierlich und bei vorzugsweise ortsfest feststehender unterer Lage 10 mit der mindestens einen darauf befindlichen elektronischen Baugruppe 2 und taktweise erfolgt, da lediglich die obere Lage 11 mittels der Aufbringvorrichtung 4 senkrecht zur Förder- bzw. Produktionsrichtung F auf die untere Lage 10 mit der elektronischen Baugruppe 2 aufgebracht wird.

In einem nicht zur Erfindung gehörenden Ausführungsbeispiel können die auf ein vorbestimmtes Fertigmaß zugeschnittenen Abschnitte der oberen Lage 11 des Gummimaterials so bemessen sein, dass ihre Länge exakt dem Abstand A zwischen aufeinanderfolgenden elektronischen Baugruppen 2 auf dem Band der unteren Lage 10 entspricht. In einem solchen Fall kann die obere Lage 11 des erhaltenen Fertigbauteils 1 gemäß Figur 1 im Querschnitt betrachtet in und entgegen der Förderrichtung F bündig mit der unteren Lage 10 unter Einbettung der elektronischen Baugruppe 2 abschließen, was in Figur 1 anhand einer strichlierten Weiterführung der oberen Lage 11 auf der rechten Seite der zeichnerischen Darstellung angedeutet ist. Auch ist es möglich, einen Versatz der oberen Lage 11 relativ zur unteren Lage 10 einzustellen, die sich in einer etwa Z-förmigen Anordnung widerspiegelt, bei der beide Lagen 10, 11 in Laufrichtung und/oder quer zu dieser verschoben sind. Die Lagen 10, 11 können in diesem Falle gleich oder ungleich lang ausgeführt sein.

Alternativ wird die Länge, d. h. das Fertigmaß der zugeschnittenen Abschnitte der oberen Lage 11 so bemessen, dass sie geringfügig kleiner als der Abstand A zwischen aufeinanderfolgenden elektronischen Baugruppen auf dem Band der unteren Lage 10 ausfällt. Beispielsweise kann bei einem Abstand A der aufeinanderfolgenden elektronischen Baugruppen 2 von etwa 10 mm die obere Lage eine Länge von lediglich 8 mm in Förderrichtung F betrachtet aufweisen. In diesem Falle stellt sich nach dem Aufbringen der oberen Lage 11 unter Einschluss der elektronischen Baugruppe 2 auf der unteren Lage 10 eine Konfiguration ein, bei der an den in Förderrichtung F und entgegen dieser Förderrichtung F liegenden Enden das Gummibauteil 1 einen bei 110 angedeuteten abgestuften Dickensprung aufweist. Dieser wird dadurch hervorgerufen, dass die obere Lage 11 in und entgegen der Förderrichtung F nicht bündig mit der unteren Lage 10 endet, sondern zurückversetzt unter Ausbildung der Stufe 110 auf der unteren Lage 10 aufliegt. Ein solcher Dickensprung ist insbesondere bei Einbindung der erhaltenen Gummibauteile 1 in den Lagenaufbau eines Fahrzeugreifens von Vorteil.

Die solchermaßen erhaltenen Gummibauteile 1 mit jeweils einer eingebetteten elektronischen Baugruppe 2 können sodann einzeln an einem Fahrzeugreifen befestigt oder während dessen Herstellung in diesen integriert werden.

Der Fachmann wird jedoch erkennen, dass das erfindungsgemäße Verfahren und die Vorrichtung nicht auf die Herstellung von Gummibauteilen 1 für den Einsatz an Reifen beschränkt ist, sondern die hergestellten Gummibauteile und deren Einzelbauteile auch für vielfältige andere Anwendungen verwendet werden können.

Es versteht sich, dass die verwendeten unteren und oberen Lagen 10,11 des Gummimaterials sowohl einschichtig als auch mehrschichtig ausgebildet sein können und überdies auch mit einer haftvermittelnden Schicht und dergleichen mehr zum Ausbilden einer guten Laminierverbindung versehen sein können.

### Bezugszeichenliste

- 1: Gummibauteil
- 2: elektronische Baugruppe
- 3: Einrichtung zum Zuführen der unteren Lage
- 4: Aufbringvorrichtung
- 5: Trennvorrichtiung
- 10: untere Lage
- 11: obere Lage
- 40: Andrückkrolle
- 100: Oberseite
- 1000: Vorratsrolle

## Patentansprüche

1. Verfahren zum Herstellen eines Gummibauteiles (1), bei welchem mindestens eine elektronische Baugruppe (2) zwischen einer unteren und einer oberen Lage (10, 11) eines Gummimaterials eingebettet wird, umfassend die Schritte:
a) Zuführen eines Bandes der unteren Lage (10) des Gummimaterials, welches auf der Oberseite (100) mit in einem vorbestimmten Abstand (A) aufgebrachten elektronischen Baugruppen (2) versehen ist, in einer Förderrichtung (F);
b) Aufbringen eines auf ein vorbestimmtes Fertigmaß zugeschnittenen Abschnittes der oberen Lage (11) des Gummimaterials auf die in Förderrichtung (F) betrachtet zuvorderst angeordnete elektronische Baugruppe (2) und haftfestes Verbinden mit der unteren Lage (10) des Gummimaterials unter Einbettung der elektronischen Baugruppe (2) zu einem Gummibauteil (1) am in Förderrichtung (F) gesehen voreilenden Ende der unteren Lage (10), wobei der Abschnitt der oberen Lage (11) eine gegenüber dem Abstand (A) verkürzte Länge aufweist;
c) Abtrennen des Gummibauteiles (1) von der unteren Lage (10).

2. Verfahren nach Anspruch 1, **dadurch gekennzeichnet, dass** die Zuführung des Bandes der unteren Lage (10) taktweise erfolgt und vor der Ausführung des Schrittes b) gestoppt wird und nach dem Aufbringen des Abschnittes der oberen Lage (11) im Schritt b) oder nach dem Abtrennen des Gummibauteiles im Schritt c) das Band der unteren Lage (10) um den Abstand (A) in Förderrichtung (F) vorgeschoben wird.

3. Verfahren nach einem der Ansprüche 1 oder 2, **dadurch gekennzeichnet, dass** die mindestens eine elektronische Baugruppe (2) als RFID-Transponder ausgebildet ist.

4. Verfahren nach einem der Ansprüche 1 bis 3, **dadurch gekennzeichnet, dass** die untere und obere Lage (10, 11) des Gummimaterials durch Laminieren unter Einwirkung von Druck und/oder Wärme haftfest miteinander verbunden werden.

5. Verfahren nach einem der Ansprüche 1 bis 4, **dadurch gekennzeichnet, dass** das Gummibauteil (1) oder das daraus vereinzelte Einzelbauteil dazu bestimmt ist, in einen Reifen eingebracht oder mit diesem verbunden zu werden.

6. Vorrichtung zum Herstellen eines Gummibauteiles (1), welches mindestens eine zwischen einer unteren und einer oberen Lage (10,11) eines Gummimaterials eingebettete elektronische Baugruppe (2) aufweist, umfassend eine Einrichtung (3) für die Zuführung eines Bandes der unteren Lage (10) in einer Förderrichtung (F), auf das die elektronischen Baugruppen (2) in regelmäßigen Abständen (A) auf der Oberseite aufgebracht sind, wobei die Einrichtung (3) für die Zuführung des Bandes der unteren Lage (10) von einem entsprechenden umlaufenden Förderband gebildet ist, eine Aufbringvorrichtung (4) zum Aufbringen und haftfesten Verbinden eines auf ein vorbestimmtes Fertigmaß zugeschnittenen Abschnittes der oberen Lage (11) des Gummimaterials auf die in Förderrichtung (F) betrachtet zuvorderst angeordnete elektronische Baugruppe (2) unter Einbettung derselben und eine Trennvorrichtung (5) zum Abtrennen des hergestellten Gummibauteiles (1), wobei der Abschnitt der oberen Lage (11) eine gegenüber dem Abstand (A) verkürzte Länge aufweist.

7. Vorrichtung nach Anspruch 6, **dadurch gekennzeichnet, dass** die mindestens eine elektronische Baugruppe (2) von einem RFID-Transponder gebildet ist.

8. Vorrichtung nach einem der Ansprüche 6 oder 7, **dadurch gekennzeichnet, dass** das Gummibauteil (1) oder das daraus vereinzelte Einzelbauteil dazu bestimmt ist, in einen Reifen eingebracht oder mit diesem verbunden zu werden.

9. Vorrichtung nach einem der Ansprüche 6 bis 8, **dadurch gekennzeichnet, dass** die Einrichtung (3) zum Zuführen des Bandes der unteren Lage (10) taktweise bewegbar ist.

## Claims

1. Method for producing a rubber component (1), in the case of which at least one electronic assembly (2) is embedded between a lower and an upper ply (10, 11) of a rubber material, comprising the steps:
a) feeding a strip of the lower ply (10) of the rubber material, which is equipped on the top side (100) with electronic assemblies (2) applied at a predetermined interval (A), in a conveying direction (F);
b) applying a portion, cut to a predetermined final size, of the upper ply (11) of the rubber material to that electronic assembly (2) which is arranged first as viewed in the conveying direction (F), and fixedly adhesively connecting said portion to the lower ply (10) of the rubber material so as to embed the electronic assembly (2) in order to form a rubber component (1) at the leading end of the lower ply (10) as viewed in the conveying direction (F), wherein the portion of the upper ply (11) has a length shorter than the interval (A);
c) severing the rubber component (1) from the lower ply (10).

2. Method according to Claim 1, **characterized in that** the feed of the strip of the lower ply (10) takes place in cyclic fashion and is stopped before step b) is carried out, and after the applying of the portion of the upper ply (11) in step b) or after the severing of the rubber component in step c) the strip of the lower ply (10) is shifted in the conveying direction (F) by the interval (A).

3. Method according to either one of Claims 1 and 2, **characterized in that** the at least one electronic assembly (2) is in the form of an RFID transponder.

4. Method according to any one of Claims 1 to 3, **characterized in that** the lower and upper plies (10, 11) of the rubber material are fixedly adhesively connected to one another by lamination under the action of pressure and/or heat.

5. Method according to any one of Claims 1 to 4, **characterized in that** the rubber component (1) or the individual component separated out therefrom is intended for being incorporated into or connected to a tyre.

6. Apparatus for producing a rubber component (1) which has at least one electronic assembly (2) embedded between a lower and an upper ply (10, 11) of a rubber material, comprising a device (3) for feeding a strip of the lower ply (10) in a conveying direction (F), to the top side of which the electronic assemblies (2) are applied at regular intervals (A), wherein the device (3) for feeding the strip of the lower ply (10) is formed by a corresponding circulating conveyor belt, an application device (4) for applying and fixedly adhesively connecting a portion, cut to a predetermined final size, of the upper ply (11) of the rubber material to that electronic assembly (2) which is arranged first as viewed in the conveying direction (F) so as to embed the electronic assembly, and a severing device (5) for severing the rubber component (1) produced, wherein the portion of the upper ply (11) has a length shorter than the interval (A).

7. Apparatus according to Claim 6, **characterized in that** the at least one electronic assembly (2) is formed by an RFID transponder.

8. Apparatus according to either one of Claims 6 and 7, **characterized in that** the rubber component (1) or the individual component separated out therefrom is intended for being incorporated into or connected to a tyre.

9. Apparatus according to any one of Claims 6 to 8, **characterized in that** the device (3) for feeding the strip of the lower ply (10) can be moved in cyclic fashion.

## Revendications

1. Procédé de fabrication d'un composant en caoutchouc (1), dans lequel au moins un ensemble électronique (2) est encastré entre une couche inférieure et une couche supérieure (10, 11) d'un matériau en caoutchouc, comprenant les étapes :
a) amener une bande de la couche inférieure (10) du matériau en caoutchouc, qui est pourvue sur la face supérieure (100) des éléments électroniques (2) agencés à une distance prédéterminée (A), dans une direction de transport (F) ;
b) appliquer une partie de la couche supérieure (11) du matériau en caoutchouc, découpée à une dimension finale prédéterminée, sur l'ensemble électronique (2) situé à l'avant dans la direction de transport (F), et lier de manière adhésive avec la couche inférieure (10) du matériau en caoutchouc en enrobant l'ensemble électronique (2) pour former un composant en caoutchouc (1) à l'extrémité avant de la couche inférieure (10) vue dans la direction de transport (F), la section de la couche supérieure (11) ayant une longueur réduite par rapport à la distance (A) ;
c) séparer le composant en caoutchouc (1) de la couche inférieure (10).

2. Procédé selon la revendication 1, **caractérisé en ce que** l'amenée de la bande de la couche inférieure (10) s'effectue de manière cadencée et est arrêtée avant l'exécution de l'étape b) et, après l'application de la partie de la couche supérieure (11) à l'étape b) ou après la séparation du composant en caoutchouc à l'étape c), la bande de la couche inférieure (10) est avancée de la distance (A) dans la direction de transport (F).

3. Procédé selon l'une des revendications 1 ou 2, **caractérisé en ce que** ledit au moins un ensemble électronique (2) est réalisé sous la forme d'un transpondeur RFID.

4. Procédé selon l'une des revendications 1 à 3, **caractérisé en ce que** les couches inférieure et supérieure (10, 11) du matériau en caoutchouc sont reliées entre elles de manière adhésive par stratification sous l'effet de la pression et/ou de la chaleur.

5. Procédé selon l'une des revendications 1 à 4, **caractérisé en ce que** le composant en caoutchouc (1) ou le composant individuel séparé de celui-ci est destiné à être introduit dans un pneumatique ou à être relié à celui-ci.

6. Dispositif pour la fabrication d'un composant en caoutchouc (1) qui comprend au moins un ensemble électronique (2), noyé entre une couche inférieure et une couche supérieure (10, 11) d'un matériau en caoutchouc, comprenant une unité (3) pour l'amenée d'une bande de la couche inférieure (10) dans une direction de transport (F), sur laquelle les ensembles électroniques (2) sont agencés à intervalles réguliers (A) sur la face supérieure, l'unité (3) pour l'amenée de la bande de la couche inférieure (10) étant formée par une bande transporteuse circulaire correspondante, un dispositif d'application (4), pour appliquer et assembler de manière adhésive une section de la couche supérieure (11) du matériau en caoutchouc, découpée à une dimension finale prédéterminée, sur l'ensemble électronique (2) situé le plus en avant dans la direction de transport (F), en l'enrobant, et un dispositif de séparation (5), pour séparer le composant en caoutchouc (1) fabriqué, la partie de la couche supérieure (11) ayant une longueur réduite par rapport à la distance (A).

7. Dispositif selon la revendication 6, **caractérisé en ce que** ledit au moins un ensemble électronique (2) est réalisé sous la forme d'un transpondeur RFID.

8. Dispositif selon l'une des revendications 6 ou 7, **caractérisé en ce que** le composant en caoutchouc (1) ou le composant individuel séparé de celui-ci est destiné à être introduit dans un pneumatique ou à être relié à celui-ci.

9. Dispositif selon l'une des revendications 6 à 8, **caractérisé en ce que** l'unité (3) pour amener la bande de la couche inférieure (10) est apte à être déplacée de manière cadencée.
